**Europäisches Patentamt**

**European Patent Office**

**Office européen des brevets**

(19)

(11) Numéro de publication : **0 290 513 B1**

(12)

# FASCICULE DE BREVET EUROPEEN

(45) Date de publication du fascicule du brevet :
**16.10.91 Bulletin 91/42**

(51) Int. Cl.⁵ : **G01B 7/10, G01B 7/34,**
**G01N 27/20**

(21) Numéro de dépôt : **87907296.5**

(22) Date de dépôt : **18.11.87**

(86) Numéro de dépôt international :
**PCT/CH87/00153**

(87) Numéro de publication internationale :
**WO 88/04028 02.06.88 Gazette 88/12**

(54) **PROCEDE POUR DETECTER DES VARIATIONS D'EPAISSEUR DANS LA PAROI D'UN CORPS TUBULAIRE CONDUCTEUR DE L'ELECTRICITE.**

(30) Priorité : **25.11.86 CH 4710/86**

(43) Date de publication de la demande :
**17.11.88 Bulletin 88/46**

(45) Mention de la délivrance du brevet :
**16.10.91 Bulletin 91/42**

(84) Etats contractants désignés :
**AT BE CH DE FR GB IT LI NL**

(56) Documents cités :
**EP-A- 0 175 257**
**GB-A- 840 552**
**GB-A- 952 106**
**GB-A- 2 161 936**
**US-A- 2 124 577**
**US-A- 4 048 558**

(72) Inventeur : **CHAROY, Alain**
**4, allée du Morvan**
**F-38130 Echirolles (FR)**
Inventeur : **VERMOT-GAUD, Jacques**
**23a, route de Certoux**
**CH-1258 Perly (CH)**
Inventeur : **PROST, Jean-Louis**
**3, rue de l'Université**
**CH-1205 Genève (CH)**
Inventeur : **KORMANN, Michel**
**31, chemin des Palettes**
**CH-1212 Grand-Lancy (CH)**
Inventeur : **GOLD, Dieter**
**5, avenue Edouard Herriot**
**F-38500 Voiron (FR)**

(74) Mandataire : **Dousse, Blasco et al**
**7, route de Drize**
**CH-1227 Carouge/Genève (CH)**

(73) Titulaire : **BATTELLE MEMORIAL INSTITUTE**
**7 route de Drize**
**CH-1227 Carouge/Genève (CH)**

## Description

La présente invention se rapporte à un procédé pour détecter des variations d'épaisseur dans la paroi d'un corps tubulaire réalisé en un matériau conducteur de l'électricité.

Le problème de la détection de la corrosion des tuyaux se pose aussi bien pour des tuyaux enterrés où la corrosion se manifeste sur la face externe, que pour des tuyaux dans lesquels circulent des substances corrosives produisant une corrosion sur la face interne. Dans l'un ou l'autre cas, il n'est pas possible d'effectuer de façon simple une inspection visuelle de l'état des tuyaux. C'est la raison pour laquelle on a proposé différentes méthodes basées sur la mesure de paramètres magnétiques ou électriques qui permettent de fournir des signaux caractéristiques de l'état de corrosion de la paroi du tuyau.

Il a déjà été proposé dans US-A-4,048,558 de détecter l'existence de défauts dans la paroi d'un tube en utilisant l'effet de peau dont la profondeur est une fonction de la fréquence du courant. Ce processus consiste à alimenter une face d'un tube avec des courants de différentes fréquences et à mesurer la variation d'impédance de ce tube en fonction de la fréquence. Chacune de ces mesures est comparée soit à une autre section du même tube maintenu à une température égale à celle de la section de tube à mesurer, soit à un tube de référence. Cette manière de procéder permet de s'affranchir des paramètres de résistivité et de perméabilité $\rho$ et $\mu$ qui sont fonction du métal du tube et de sa température, de sorte que les variations qui apparaitront au cours de la comparaison seront obligatoirement dues à des différences dans la structure de la paroi des deux sections de tubes comparées. Cette manière de procéder nécessite d'avoir dans l'échantillon et dans la référence, les mêmes valeurs de $\rho$ et $\mu$. Ceci n'est pas possible dans le cas d'un tuyau enterré, étant donné que l'on ne peut pas reproduire sur une référence les mêmes conditions que celles du tuyau enterré. Par conséquent, dans ce cas, non seulement les défauts éventuels sont inconnus, mais également les paramètres $\rho$ et $\mu$.

Le EP-A-0.175.257 a également proposé la détection de défauts sur des conducteurs tubulaires, en utilisant l'effet de peau. Selon ce procédé on alimente le conducteur tubulaire en courant alternatif de fréquence déterminée dans une direction donnée engendrant un flux magnétique de direction donnée, on capte une chute le tension à travers deux points de mesure espacés l'un de l'autre d'une distance donnée avec deux lignes de mesure touchant le conducteur tubulaire, on forme une première boucle conductrice depuis les lignes de mesure et le conducteur tubulaire avec une surface d'induction utile aussi faible que possible, on forme une seconde boucle conductrice parallèle à la direction du courant et perpendiculaire à celle du flux magnétique, on mesure, avec cette seconde boucle, une tension d'induction consécutive au chargement du flux magnétique aussi près que possible des points de mesure, on injecte la chute de tensions et la tension d'induction dans un circuit d'évaluation électronique pour mesurer la chute de tension et on déduit de la chute de tension et de la tension d'induction, la résistance locale du conducteur tubulaire entre les points de mesure.

Ce procédé n'est pas adapté à la mesure de défauts sur des segments de tuyaux de plusieurs mètres et nécessite de ce fait d'avoir accès au conducteur tubulaire sur toute sa longueur puisqu'il nécessite une sorte d'auscultation de la face externe du conducteur en ne permettant de mesurer que des segments très courts, le dispositif d'auscultation devant être déplacé le long du conducteur tubulaire.

Dans le cas de tuyaux enterrés, les mesures électriques sont rendues difficiles et imprécises en raison des influences de la terre qui recouvre le tuyau. C'est la raison pour laquelle on a également proposé de monter l'ensemble des appareils de mesure et d'enregistrement le ces mesures sur un support mobile destiné à être introduit dans le tuyau et à s'y déplacer, entraîné soit par l'écoulement du fluide dans le tuyau soit par des moyens de propulsion autonomes. Cette technique qui utilise des procédés de mesures tels que l'échographie ultrasonore, les courants de Foucault , l'analyse du champ magnétique, est complexe et la localisation des défauts nécessite de connaître avec précision les paramètre de déplacement de ce support mobile.

La présente invention propose un procédé de détection de la variation d'épaisseur de la paroi des tuyaux qui permet de transmettre un signal à l'extérieur du tuyau, dans le cas d'un tuyau enterré, de sorte que l'on peut suivre l'évolution des paramètres mesurés, qui dépendent de l'épaisseur, au fur et à mesure qu'un élément de captage progresse dans le tuyau, ce qui permet de localiser avec précision les défauts et d'en connaître leur importance. Toutefois, la seule détection de défauts et de leur importance peut être captée par des éléments fixes.

A cet effet, la présente invention a pour objet un procédé selon la revendication 1 ou la revendication 2.

L'avantage essentiel de cette invention réside dans le fait que le signal est mesuré avec sensibilité et indépendamment du milieu environnant le tuyau. Dans un cas, le signal qui est une tension caractéristique de l'impédance transversale de la paroi du tuyau entre deux électrodes peut être transmis par un conducteur, de sorte qu'il est possible de faire une corrélation directe entre la progression des électrodes et l'évolution du signal. Dans l'autre cas, le signal qui est une tension caractéristique de l'impédance longitudinal de la paroi du tuyau est comparé à des modèles mathématiques.

Le dessin annexé illustre, schématiquement et à titre d'exemple, divers modes de mise en oeuvre du procédé objet de cette invention.

La figure 1 est un schéma explicatif illustrant une coupe longitudinale d'un tube sur lequel sont portés les paramètres caractéristiques du procédé.

Les figures 2 et 3 sont des diagrammes relatifs au schéma de la figure 1

La figure 4 est un diagramme de phase du signal capté.

La figure 5 représente des diagrammes relatifs au traitement de ce signal.

La figure 6 est un schéma bloc de l'installation de mesure.

Les figures 7 et 8 sont des diagrammes relatifs à deux modes de mise en oeuvre de ce procédé.

La figure 9 illustre, vue en perspective, une variante d'application du procédé selon l'invention.

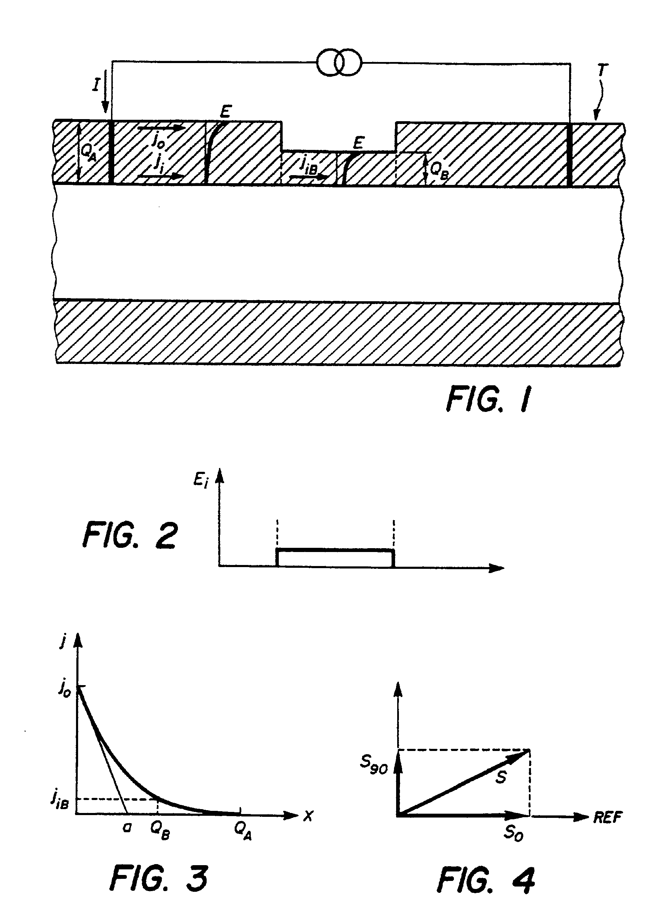

Le procédé est base sur l'exploitation de "l'effet de peau" qui se manifeste dans tout matériau conducteur de l'électricité en fonction de la fréquence du courant qui le traverse. Dans la description qui suit, on considère que le tube T illustré par la figure 1 est normalement alimenté sur sa face externe à l'aide d'un courant I.

Si l'on considère tout d'abord les figures 1 à 3, on constate que la densité de courant j et le champ électrique E varient tous deux de la même manière en fonction de la fréquence du courant.

En effet, l'expression qui se rapporte à la densité de courant J en fonction de la profondeur x dans la paroi du tuyau est :

$$j = j_o \ e^{-x/a}$$

"a" correspond à la profondeur de l'effet de peau et est donné par

$a = \sqrt{\rho/\pi\mu F}$ ($\rho$: résistivité, $\mu$ : perméabilité et F: fréquence)

$j_o$: densité de courant sur la face externe du tuyau.

Cette densité de courant diminue rapidement de la surface externe à la surface interne du tuyau T, principalement pour x > a. Cette variation est donnée dans le tableau ci-dessous qui indique la valeur de $e^{-x/a}$ pour $x_i = 0$, a, 2a, 4a, etc.

| $x_i$ | $e^{-xi/a}$ | $e^{-x(i+1)/a}/e^{-xi/a}$ |
|---|---|---|
| 0 | 1.0 | |
| a | 0.368 | 0.368 |
| 2a | 0.135 | 0.368 |
| 4a | 0.018 | 0.135 |
| 8a | $3.35.10^{-4}$ | 0.0183 |
| 16a | $1.125.10^{-7}$ | $3.35.10^{-4}$ |

Quant au champ électrique correspondant, il varie de la même manière, étant donné par l'expression:

$$E = j \, Zs$$

Zs : impédance de surface $= \sqrt{\omega\rho\mu}$

($\omega$ : pulsation du courant d'excitation $= 2\pi F$)

Comme on peut le constater sur le diagramme de la figure 2 qui constitue une représentation graphique du tableau précédent, le rapport entre le champ électrique $E_i$ mesuré à une fréquence convenablement choisie sur la face interne du tuyau T dans la partie $Q_B$ où l'épaisseur de la paroi est réduite et le champ électrique dans la partie $Q_A$ où l'épaisseur est normale, varie fortement en fonction de cette épaisseur de paroi. C'est ce phénomène que l'invention propose de mettre en oeuvre pour faire apparaître la présence d'un défaut engendrant un amincissement de la paroi du tuyau.

Le signal mesuré sur la face interne du tuyau et qui correspond au champ électrique sur cette face est essentiellement la résultante d'une composante résistive et d'une composante inductive dépendant en partie des tensions parasites induites. Seule la composante résistive est donc une bonne mesure de l'effet de peau. De ce fait, il faut que l'installation de mesure destinée à mettre en oeuvre le procédé soit conçue de manière à rejeter la partie du signal qui n'est pas en phase avec le courant.

On peut obtenir ce résultat soit avec un amplificateur à corrélation de phase soit avec un analyseur à réponse en fréquence et en phase.

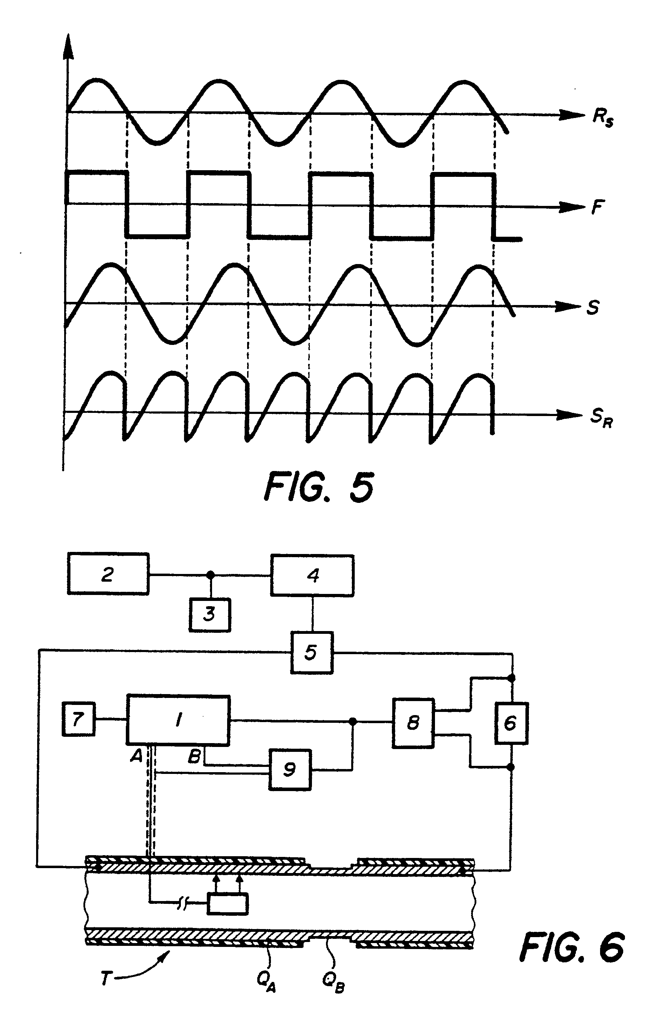

Nous décrirons à titre d'exemple une installation utilisant un amplificateur à corrélation de phase. Nous expliquerons à l'aide des figures 4 et 5 le mode de fonctionnement d'un tel amplificateur qui est utilisé comme démodulateur synchrone, travaillant de la façon suivante :

Tout signal S (fig. 4) peut être considéré comme la somme vectorielle de deux vecteurs, l'un $S_o$ en phase avec la référence et l'autre $S_{90}$ faisant un angle droit avec cette référence. Si le démodulateur est corrélé en phase avec le signal de référence $R_S$, le signal rectifié $S_R$ apparaissant à sa sortie sera une fonction du vecteur en phase $S_o$ seulement, comme on le voit sur les diagrammes de la figure 5 où l'on peut observer successivement le signal de référence $R_S$ qui permet de former un signal rectangulaire F qui constitue une fenêtre à travers laquelle on rectifie le signal mesure S pour obtenir le signal rectifié $S_R$.

Le schéma-bloc de la figure 6 se rapporte à titre d'exemple à une installation englobant un amplificateur à corrélation de phase 1 type PAR 128A, un générateur de fréquence 2 type Wavetek 134, un compteur de fréquence 3 type HP 5300A, un amplificateur de puissance 4 type Bruel et Kjaer 2706, un transformateur toroïdal 5 présentant un rapport de transformation de 35 et un courant secondaire maximum de 20A, un shunt 6 de 10m$\Omega$ avec un courant maximum de 10A, un voltmètre 7 type Solartron 7040, un amplificateur basse puissance 8 type Levell TA 605 et une boîte de commutation 9. La fréquence peut varier de 3 à 1000 Hz avec un courant maximum de 10A.

Le fonctionnement de cette installation consiste à alimenter le transformateur 5 à partir du générateur 2 et de l'amplificateur 4 pour produire le courant destine à alimenter le tuyau T et à mesurer la tension aux bornes du shunt 6. Cette tension, caractéristique du courant d'excitation, est tout d'abord amplifiée 10 fois par l'amplificateur 8 afin d'obtenir une amplitude suffisante et est ensuite amenée à l'entrée de la référence de l'amplificateur à corrélation de phase 1. La sortie de cet amplificateur 8 peut également être connectée à l'entrée de mesure de l'amplificateur à corrélation de phase 1 par l'intermédiaire de la boîte de commutation 9. Ce dernier mode de connexion peut permettre la mesure et le réglage de l'amplitude du courant ainsi que le réglage de phase.

La composante résistive du signal sur le tuyau est ensuite mesurée en connectant les points de mesure aux entrées différentielles A et B de l'amplificateur à corrélation de phase 1 et en ne mesurant que la composante en phase du signal. La connexion doit être faite de manière à ne mesurer que le champ interne, ce qui signifie que pour sortir du tube il faut utiliser un cable coaxial insensible au flux magnétique extérieur.

La mesure elle-même du signal relevé sur le tuyau T consécutivement à son alimentation par le signal de référence peut être effectuée de trois façons différentes.

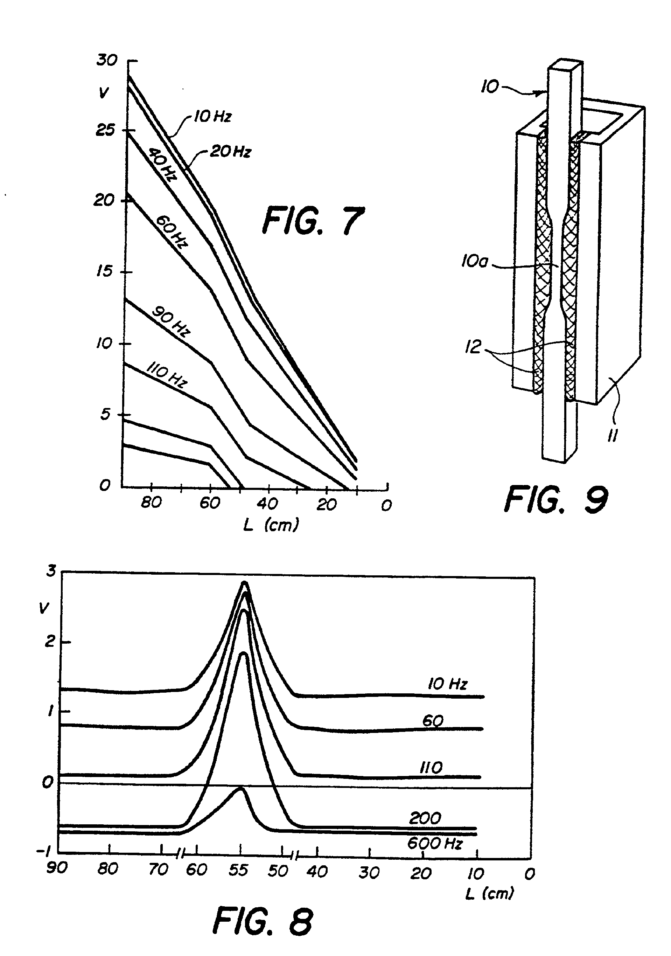

Un des points de mesure peut être fixé sur la face interne du tuyau T et l'autre point peut être déplacé longitudinalement sur cette même face. Ce déplacement peut être répété plusieurs fois en variant à chaque course du point mobile la fréquence du courant d'alimentation. Dans le cas du tronçon de tuyau T sur lequel une réduction d'épaisseur $Q_B$ a été pratiquée, le reste du tuyau T présentant une épaisseur constante $Q_A$, le diagramme de la tension V en fonction de la distance L séparant les deux points l'un de l'autre est donné par la figure 7. On constate que le défaut devient particulièrement visible aux environs de 100 Hz pour le tuyau examiné. Cette mesure permet de déterminer à la fois l'importance et la position longitudinale du défaut.

Selon une autre mise en oeuvre de ce procédé de mesure, les deux points de mesure du signal sur la face interne du tuyau T sont maintenus à une distance fixe l'un de l'autre et déplacés ensemble le long de cette face interne. Ce déplacement peut être répeté sur un même tronçon de tuyau en variant la fréquence du courant d'alimentation qui constitue aussi le signal de référence. La présence du défaut est mise immédiatement en évidence sur le diagramme de la figure 8 par un pic qui varie en fonction de la fréquence, ce pic étant, dans cet exemple, le plus important entre 100 et 200 Hz. Comme dans le cas précédent, le pic est caractéristique de l'importance et de la position du défaut le long du tuyau.

L'inconvénient de ces solutions provient de la nécessité de déplacer au moins un des points de captage du signal à l'intérieur du tube. Ceci signifie que, dans le cas d'un tuyau enterre, il est nécessaire de placer le ou les points de captage mobiles sur un organe de transport qui doit évidemment être introduit dans le tuyau au moment de la mesure et retiré ensuite. Il existe déjà de tels organes destinés à se déplacer dans un conduit tubulaire, mais il serait aussi intéressant d'avoir une solution basée sur le principe de l'effet de peau auquel l'invention a recours mais permettant la mesure du signal à l'aide de points fixes. Dans ces conditions, on peut fixer deux points de mesure sur la face interne du tuyau séparés par une distance donnée et les relier à l'extérieur par un ensemble de deux conducteurs agences en mode coaxial de manière à ne pas capter le flux magnétique extérieur et auquel on connecte l'installation de mesure. Le champ électrique existant sur la face interne entre ces deux points est alors mesure en fonction de la fréquence.

Dans cette variante de captage du signal, les courbes relevées en fonction du balayage de fréquence permettront de détecter les défauts d'épaisseur du tuyau en comparant la courbe à une série de courbes tracées à l'aide d'un ordinateur et obtenues en faisant varier les paramètres inconnus c'est-à-dire les paramètres non géométriques tels que la résistivité $\rho$ et la perméabilité $\mu$. Si l'on fixe arbitrairement la profondeur de la corrosion,

4

EP 0 290 513 B1

la longueur des parties corrodées est également une inconnue et constituera donc aussi un des paramètres qu'il faudra faire varier.

La comparaison de ces courbes calculées avec la courbe mesurée permettra alors de relever la présence de défauts et, dans une certaine mesure d'en estimer l'importance. Par contre, l'emplacement du (ou des) défaut(s) entre les deux points de mesure ne peut, dans ce cas, pas être déterminé. Ce désavantage est compensé par le fait que ce mode de captage du signal ne nécessite pas d'électrodes mobiles à l'intérieur du tuyau, ce qui constitue une simplification évidente de la mise en oeuvre. Dans le cas d'installations nouvelles, les tuyaux peuvent être munis d'électrodes internes de captage du signal reliées par exemple à une centrale de mesure par un système de cablage. Dans des installations existantes utilisées pour la distribution urbaine de gaz par exemple, il est possible d'accéder à l'intérieur des canalisations par les différents branchements aux habitations. Ces mêmes branchements peuvent être utilisés pour introduire des électrodes mobiles à l'intérieur du tuyau selon les modes de captage décrits précédemment.

Comme indiqué plus haut, la description précédente traite le cas où la mesure se fait à l'intérieur du tube. Si l'on désire faire la mesure à l'extérieur du tube, l'excitation doit être réalisée par l'intérieur du tube afin que l'effet de peau se manifeste sur la face interne.

Toutefois dans le cas de la mesure du champ électrique en fonction de la fréquence entre deux points fixes et de la comparaison de la courbe obtenue avec une série de courbes tracées à l'aide d'un ordinateur et obtenues en faisant varier les paramètres non géométriques inconnus, comme indiqué ci-dessus, il est alors possible, d'utiliser ce même procédé en effectuant la mesure du même côté du tuyau que celui par lequel on effectue l'alimentation. Le signal mesuré sera alors bien celui de l'évolution du champ électrique en fonction de la fréquence du courant envoyé à travers le tuyau.

Dès lors, il devient possible d'effectuer des mesures sur des tuyaux enterrés en venant simplement en contact avec la face externe de la paroi de ces tuyaux. Nous allons décrire maintenant un peu plus en détail différentes manières de procéder à cette opération de comparaison. On admet que l'on connait tous les paramètres géométriques du tuyau à l'exception des modifications de ces paramètres consécutifs à la corrosion. Par contre les paramètres électriques sont inconnus, du fait que l'on ne connait ni la température, ni les propriétés électriques du matériau dont est fait le tube, ni les influences de son environnement.

Le modèle mathématique que l'on utilise est basé sur trois formules aptes à calculer l'impédance du tuyau (1) à courant continu ou à très basse fréquence (<1Hz), (2) à fréquence élevée pour laquelle l'effet de peau est totale, c'est-à-dire, qu'il se manifeste complètement dans l'épaisseur de la paroi du tuyau et (3) à fréquence intermédiaire où l'effet de peau se produit au-delà de l'épaisseur de la paroi du tuyau. Ces trois formules sont données ci-après dans l'ordre énoncé:

$$(1) \qquad E_{DC} = \rho \frac{L_o}{S_a} = \rho \frac{L_o}{\pi(r^2-q^2)}$$

où:

$L_o$ représente la longueur de tuyau considérée

$S_a$ représente sa section avec le r le rayon extérieur et q le rayon intérieur

$\rho$ représente la résistivité

$$(2) \qquad R_{AC} = \frac{L_o}{2r} \sqrt{\frac{\rho \mu F}{\pi}}$$

où :

$\rho$ est la résistivité

$\mu$ est la perméabilité

F est la fréquence

La troisième formule donne l'impédance par unité de longueur Z' tirée de H.B. Duright: "A Precise Method of Calculation of Skin Effect in Isolated Tubes" :

$$(3)$$

$$Z'/R_{DC} = \frac{jmr}{2} \frac{(r^2 - q^2)}{r^2} \frac{[(ber\ mr + j\ bei\ mr) + \frac{(C + jD)}{(A + jB)}(ker\ mr + j\ kei\ mr)]}{[(ber'mr + j\ bei'mr + \frac{(C + jD)}{(A + jB)}(ker'mr + j\ kei'mr]}$$

avec

5

$$\frac{C + jD}{A + jB} = \frac{(ber'mq + j\,bei'mq)}{(ker'mq + j\,kei'mq)}$$

où:

$R_{DC}$ est la résistance du tuyau à courant continu

j l'unité imaginaire ($\sqrt{-1}$)

$m = \sqrt{2\pi f\mu/\rho}$: la profondeur d de l'effet de peau conventionnel est rapporté à m par $m = \sqrt{2/d}$

f la fréquence

$\mu$ la perméabilité du conducteur

$\rho$ la résistivité du conducteur

r le rayon extérieur du tuyau

q le rayon intérieur du tuyau

ber et bei les parties réelle et imaginaire de la fonction de Kelvin du premier genre

ker et kei les parties réelle et imaginaire de la fonction de Kelvin du second genre, toutes quatre d'ordre zéro,

ber', bei', ker' et kei' les dérivés des fonctions de Kelvin correspondantes.

Les paramètres géométriques connus sont donc $L_o$, r et q, ceux qui sont inconnus sont $\rho$ et $\mu$ ainsi que le rayon exterieur $\tau$ du tuyau dans les zones corrodées.

Diverses approches peuvent être envisagées pour effectuer et analyser la corrélation entre l'impédance longitudinale mesurée en fonction de différentes fréquences du courant d'alimentation et le modèle mathématique. A titre d'exemple, on peut citer trois approches différentes susceptibles de résoudre ce problème.

Dans un premier exemple, on admet que le tronçon de tuyau consideré est exempt de corrosion, ce qui implique l'application parfaite du modèle.

La relation (1) permet alors de calculer une valeur de $\rho$ correspondant à un tuyau non corrodé. Ensuite on a recours à la relation (3) pour calculer pour chaque fréquence $f_i$ pour laquelle $Z'/R_{DC}>1$, la valeur de la perméabilité magnétique $\mu_i$.

Si les valeurs succesives de $\mu_i$ ainsi calculées à partir de ce $\rho$ sont constantes ou suivent une loi correspondant à la perméabilité magnétique de l'acier utilise pour la confection du tuyau, la supposition initiale que ce tuyau n'est pas corrodé se trouve ainsi confirmée. Dans le cas contraire, on peut en conclure que le tuyau est corrodé entre les deux points de mesure.

Selon un deuxième exemple, on admet que le tuyau comporte une zone corrodée de géométrie déterminée par exemple un défaut s'étendant sous forme d'un anneau sur la face externe du tuyau, dont la largeur est inconnue et dont on admet qu'elle affecte la moitie de l'épaisseur de sa paroi:

On adapte alors le modèle mathématique à ces nouvelles conditions. La corrélation et son interprétation comportent dans ce cas des variantes, une variante simplifiée de moindre précision et une variante de haute précision plus élaborée.

Dans le cas de la première de ces variantes, on utilise la relation (2) pour déterminer le produit $\rho\,\mu$, étant donné que la valeur de $R_{AC}$ relative à l'effet de peau total, est pratiquement indépendante de la présence de défauts de corrosion.

A l'aide de l'expression (3) on recherche au moyen d'une boucle de balayage une valeur de $\mu$ qui correspond à une valeur d'impédance mesurée à une fréquence déterminée, choisie pour que l'effet de peau se restreigne à une épaisseur de paroi correspondant à l'épaisseur laissée par la corrosion supposée (50%) à répartition annulaire. Au moyen d'une seconde boucle de balayage qui peut contenir la précédente et à l'aide de l'expression (3) adaptée en fonction de la géometrie supposée du défaut, on détermine la largeur de la zone corrodée supposée qui correspond à la largeur pour laquelle on retrouve la valeur de l'impédance longitudinale mesurée.

L'inconvénient de cette méthode provient du fait que la détermination du produit $\rho\,\mu$ à fréquence relativement élevée fait prendre en compte une valeur de $\mu$ qui peut avoir été déjà influencée par la fréquence.

L'utilisation d'une seule fréquence pour la boucle sur $\mu$ n'utilise qu'une partie de l'information disponible. Enfin le fait de baser arbitrairement la recherche sur un certain type de défaut de corrosion ne tient pas compte du fait que la corrosion du tuyau peut être d'un autre type.

Selon une variante de ce mode de corrélation, on utilise une série de modèles mathématiques correspondant à divers types d'attaques de corrosion. En outre cette corrélation doit prendre en compte les variations d'impédance en fonction de la fréquence dès l'apparition de l'influence de l'effet de peau, en évitant de prendre en compte le résultat des mesures correspondant aux fréquences élevées de manière à réduire l'influence de la variation de $\mu$ en fonction de la fréquence.

La variante illustrée par la figure 9 montre une application du procédé selon l'invention pour la détection de la propagation de fissures sur une éprouvette de traction 10. La zone 10a de l'éprouvette dans laquelle les fissures se produiront consécutivement à la traction est intégrée dans la paroi d'un blindage tubulaire métallique 11 avec interposition d'un élément déformable, telle qu'une tresse de cuivre 12 repliée de part et d'autre de l'éprouvette 1 et servant à établir la liaison électrique entre l'éprouvette 10 et le blindage tubulaire 11, sans que ce blindage ne participe à l'effort de traction exercé sur l'éprouvette.

Lors de la mise en oeuvre du procédé selon l'invention, le blindage 11 avec son éprouvette 10 sont alimentés par une des faces interne ou externe. Le champ électrique est mesuré sur l'autre face. Etant donné que ce champ dépend de l'impédance transversale, lorsqu'une fissure apparait sur l'éprouvette et progresse, le champ électrique mesure augmente pour une fréquence supérieure à une fréquence limite d'autant plus élevée que la fissure est plus profonde.

## Revendications

1. Procédé pour détecter des variations d'épaisseur dans la paroi d'un corps tubulaire en un matériau conducteur de l'électricité, selon lequel on alimente une des faces de la paroi de ce tube avec un courant alternatif de référence et que l'on mesure un signal qui représente l'évolution de la tension caractéristique du champ électrique entre deux électrodes distantes longitudinalement l'une de l'autre, caractérisé par le fait que l'on mesure ledit signal sur l'autre face du corps tubulaire et que l'on rejette la part du signal mesuré qui n'est pas en phase avec le courant alternatif de référence et que l'on varie au moins l'un des paramètres constitués par la distance entre les électrodes, la position longitudinale des deux électrodes le long dudit corps et la fréquence du courant d'excitation, la fréquence du courant d'excitation ayant toujours une valeur pour laquelle la profondeur de l'effet de peau est supérieure à l'épaisseur de ladite paroi.

2. Procédé pour détecter des variations d'épaisseur dans la paroi d'un corps tubulaire en un matériau conducteur de l'électricité selon lequel on alimente une des faces de la paroi de ce tube avec un courant alternatif de référence et que l'on mesure sur une des faces de la paroi de ce tube un signal qui représente l'évolution de la tension caractéristique du champ électrique entre deux électrodes distantes longitudinalement l'une de l'autre, caractérisé par le fait que l'

a) on produit un modèle mathématique pour calculer l'impédance du corps tubulaire en utilisant des courants d'excitation dans au moins deux gammes de fréquences prédéterminées dans lesquelles l'effet de peau du courant est sensiblement différent

b) on varie la fréquence du courant de référence selon lesdites gammes de fréquences prédéterminées

c) on rejette la portion des signaux mesurés qui n'est pas en phase avec le courant alternatif de référence

d) on admet arbitrairement une valeur de variation d'épaisseur de la paroi du corps tubulaire

e) on résoud une première équation du modèle mathématique avec un des signaux mesurés correspondant à une fréquence comprise dans une première desdites gammes et à ladite valeur de variation d'épaisseur admise afin d'identifier un paramètre inconnu

f) on résoud une seconde équation dudit modèle mathématique avec les autres signaux mesurés correspondant aux fréquences de la seconde desdites gammes et avec ledit paramètre identifié afin d'identifier un second paramètre inconnu et

g) on examine l'évolution de cet autre paramètre afin de déterminer si cette valeur de variation d'épaisseur est correcte ou non

h) sinon, on répète les étapes d) à g) après avoir choisi une autre valeur de variation d'épaisseur jusqu'à ce que cette variation d'épaisseur s'avère correcte.

3. Procédé selon la revendication 2, caractérisé par le fait que lesdites gammes de fréquences sont choisies à des valeurs pour lesquelles la profondeur de l'effet de peau est supérieure à l'épaisseur de ladite paroi.

## Patentansprüche

1. verfahren zum Feststellen der Änderungen der Dicke bei der Wand eines rohrförmigen Körpers aus elektrisch leitendem Material, bei dem man eine der Flächen der Wand des Rohres mit einem Bezugswechselstrom speist und daß man auf einer der Flächen der Wand des Rohres ein Signal mißt, das die Entwicklung der charakteristischen Spannung des elektrischen Feldes zwischen zwei Electroden darstellt, die in Längsrichtung einen Abstand voneinander haben, dadurch gekennzeichnet, daß man das Signal auf der anderen Seite des rohrförmigen Körpers mißt und daß man jenen Teil des gemessenen Signals, das nicht mit dem Bezugswechselstrom in Phase ist, unterdrück und daß man wenigstens einen der Parameter, die durch den Abstand zwischen den Elektroden, der Längslage der beiden Elektroden zur Länge des Körpers und der Frequenz des Erregungsstromes gebildet werden, ändert, wobei die Frequenz des Erregerstromes stets einen Wert hat, bei dem die Dicke des Hauteffektes größer ist als die Dicke der Wand.

2. Verfahren zum Feststellen der Änderung der Dicke bei der Wand eines rohrförmigen Körpers aus elektrisch leitendem Material, bei dem man eine der Flächen der Wand des Rohres mit einem Bezugswechselstrom speist und daß man auf einer der Flächen der Wand des Rohres ein Signal mißt, das die Entwicklung der charakteristischen Spannung des elektrischen Feldes zwischen zwei Elektroden darstellt, die in Längsrichtung einen Abstand voneinander haben, dadurch gekennzeichnet, daß man

a) ein mathematisches Modell zur Berechnung der Impedanz des rohrförmigen Körpers herstellt, indem man die Erregungsströme in wenigstens zwei vorbestimmten Frequenzbereichen verwendet, in denen der Hauteffekt des Stromes merklich verschieden ist,

b) man ändert die Frequenz des Bezugsstromes gemäß den beiden vorbestimmten Frequenzbereichen,

c) man unterdrückt den Teil der gemessenen Signale, der nicht in Phase mit dem Bezugswechselstrom ist,

d) man läßt willkürlich einen Änderungswert der Dicke der Wand des rohrförmigen Körpers zu,

e) man löst eine erste Gleichung des mathematischen Modells mit einem der gemessen Signale, das einer Frequenz entspricht, die in einem ersten Bereich enthalten ist und beim Änderungswert der Dicke es schließlich zuläßt, einen unbekannten Parameter zu identifizieren,

f) man löst zweite Gleichung dieses mathematischen Modells mit den anderen gemessenen Signalen entsprechend den Frequenzen des zweiten Bereiches und mit dem identifizierten Parameter, um einen zweiten unbekannten Parameter zu identifizieren, und

g) man untersucht die Entwicklung dieses anderen Parameters, um festzustellen, ob dieser Wert der Dickenänderung richtig ist oder nicht,

h) wenn nicht, wiederholt man die Stufen (d) bis (g), nachdem man einen anderen Änderungswert der Dicke gewält hat, bis diese Dikkenänderung sich als richtig erweist.

3. Verfahren nach Anspruch 2, ddurch gekennzeichnet, daß die Frequenzbereiche nach den Werten gewählt werden, für die die Größe des Hauteffektes größer ist als die Dicke der Wand.

## Claims

1. A method for detecting thickness variations in the wall of a tubular body which is made of an electrically conducting material, according to which an alternating reference current is supplied to one of the faces of the wall of this tube and a signal is measured which represents the evolution of the characteristic voltage of the electric field between two electrodes which are spaced apart longitudinally, characterised by the fact that the said signal is measured on the other face of the tubular body, that the part of the measured signal which is not in phase with the alternating reference current is rejected and, that at least one of the parameters constituted by the distance between the electrodes, the longitudinal position of the two electrodes along the said body and the frequency of the energization current is varied, the frequency of the energization current always having a value for which the depth of the skin effect is greater than the thickness of the said wall.

2. A method for detecting thickness variations in the wall of a tubular body which is made of an electrically conducting material, according to which an alternating reference current is supplied to one of the faces of the wall of this tube and, on one of the faces of the wall of this tube, a signal is measured which represents the evolution of the characteristic voltage of the electric field between two electrodes which are spaced apart longitudinally, characterised by the fact that

a) a mathematical model is produced in order to calculate the impedance of the tubular body by using energization currents in at least two predetermined frequency ranges in which the skin effect of the current is substantially different

b) the frequency of the reference current is varied according to the said predetermined frequency ranges

c) the portion of the measured signals which is not in phase with the alternating reference current is rejected

d) a thickness variation value is permitted arbitrarily for the wall of the tubular body

e) a first equation of the mathematical model is solved with one of the measured signals corresponding to a frequency included in the first of the said ranges and to the said permitted thickness variation value, in order to identify an unknown parameter

f) a second equation of the said mathematical model is solved with the other measured signals corresponding to the frequencies of the second of the said ranges and with the said identified parameter, in order to identify a second unknown parameter and

g) the evolution of this other parameter is examined in order to determine whether this thickness variation value is correct or not

h) if not, after having chosen another thickness variation value, the stages d) to g) are repeated until this thickness variation turns out to be correct.

3. A method according to Claim 2, characterised by the fact that the said frequency ranges are chosen at values for which the depth of the skin effect is greater than the thickness of the said wall.

FIG. 1

FIG. 2

FIG. 3

FIG. 4

**FIG. 5**

**FIG. 6**

FIG. 7

FIG. 9

FIG. 8